# EUROPÄISCHE PATENTANMELDUNG

(11) **EP 0 877 041 A1**
(43) Veröffentlichungstag der Anmeldung: **11.11.1998**
(21) Anmeldenummer: 98107388.5
(22) Anmeldetag: 23.04.1998
(51) Int. Cl.: C08G 18/12, C08G 18/08, C09J 175/04

(54) **Wässerige Dispersionen, enthaltend ein Polyurethan**

(30) Priorität: 09.05.1997 DE 19719515
(71) Anmelder: BASF AKTIENGESELLSCHAFT, 67056 Ludwigshafen (DE)
(72) Erfinder: Licht, Ulrike, Dr., 68163 Mannheim (DE); Angel, Maximilian, Dr., 67105 Schifferstadt (DE); Seibert, Horst, 67136 Fussgönheim (DE)

(57) **Zusammenfassung**

Verfahren zur Herstellung von wässerigen Dispersionen, enthaltend ein Polyurethan, wobei man zur Herstellung dieses Polyurethans
I. in Schritt (I) zunächst ein Polyurethanpräpolymer mit einem NCO-Gehalt von 0,05 bis 0,6 Gew.-% herstellt, welches aufgebaut ist aus
   a) Diisocyanaten mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
   c) von den Monomeren (a) und (b) verschiedene Monomeren mit zwei Isocyanatgruppen oder wenigstens zwei gegenüber Isocyanatgruppen reaktiven Gruppen, die darüber hinaus wenigstens eine hydrophile Gruppe oder eine potentiell hydrophile Gruppe tragen, wodurch die Wasserdispergierbarkeit der Polyurethane bewirkt wird und
   d) gegebenenfalls von den Monomeren (a) bis (c) verschiedene Monomeren mit 2 gegenüber Isocyanatgruppen reaktiven Gruppen, ausgewählt aus der Menge der primären Aminogruppe, der sekundären Aminogruppe, und der alkoholischen Hydroxylgruppe und der Thiolgruppe
II. in Schritt (II) das gemäß Schritt (I) hergestellte Polyurethanpräpolymer in Wasser dispergiert und
III. in Schritt (III) der gemäß Schritt (II) hergestellten Polyurethanpräpolymer-Dispersion einen Kettenverlängerer (e) mit mindestens 3 Reaktivgruppen (e), ausgewählt aus der Menge der primären Aminogruppe, der sekundären Aminogruppe und der Thiolgruppe, in solchen Mengen zusetzt, daß auf 1 mol Isocyanatgruppen im Polyurethanpräpolymer 1,1 bis 0,05 Reaktivgruppen (e) kommen.

## Beschreibung

Die vorliegende Erfindung betrifft Verfahren zur Herstellung von wässerigen Dispersionen, enthaltend ein Polyurethan, wobei man zur Herstellung dieses Polyurethans
I. in Schritt (I) zunächst ein Polyurethanpräpolymer mit einem NCO-Gehalt von 0,05 bis 0,6 Gew.-% herstellt, welches aufgebaut ist aus
   a) Diisocyanaten mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
   c) von den Monomeren (a) und (b) verschiedene Monomere mit zwei Isocyanatgruppen oder wenigstens zwei gegenüber Isocyanatgruppen reaktiven Gruppen, die darüber hinaus wenigstens eine hydrophile Gruppe oder eine potentiell hydrophile Gruppe tragen, wodurch die Wasserdispergierbarkeit der Polyurethane bewirkt wird und
   d) gegebenenfalls von den Monomeren (a) bis (c) verschiedene Monomeren mit 2 gegenüber Isocyanatgruppen reaktive Gruppen, ausgewählt aus der Menge der primären Aminogruppe, der sekundären Aminogruppe, und der alkoholischen Hydroxylgruppe und der Thiolgruppe
II. in Schritt (II) das gemäß Schritt (I) hergestellte Polyurethanpräpolymer in Wasser dispergiert und
III. in Schritt (III) der gemäß Schritt (II) hergestellten Polyurethanpräpolymer-Dispersion einen Kettenverlängerer (e) mit mindestens 3 Reaktivgruppen (e), ausgewählt aus der Menge der primären Aminogruppe, der sekundären Aminogruppe und der Thiolgruppe, in solchen Mengen zusetzt, daß auf 1 mol Isocyanatgruppen im Polyurethanpräpolymer 1,1 bis 0,05 Reaktivgruppen (e) kommen.

Weiterhin betrifft die Erfindung die so hergestellten Dispersionen selbst, Verfahren zur Herstellung von Verklebungen mit diesen Dispersionen sowie nach diesen Verfahren verklebte Gegenstände.

Polyurethandispersionen mit anionischen Gruppen und deren Verwendung als Klebstoffe sind allgemein bekannt (vgl. D.G. Oertel Kunststoff Handbuch 7, 2. Auflage, 1983, Carl Hanser Verlag München Wien, S. 24 bis 25, S. 571 bis 574 und S. 591 bis 592).

Polyurethandispersionen werden als Klebstoffe häufig in der Form angewandt, daß man sie auf das zu verklebende Werkstück als Film aufträgt, das Wasser verdampft, den getrockneten Film kurzzeitig auf Temperaturen von ca. 40 bis 100°C erhitzt (Aktivierung) und mit einem anderen Werkstück verklebt.

Mit Klebstoffdispersionen, die ein befriedigendes Eigenschaftsniveau aufweisen, lassen sich auf diese Weise Werkstücke aus unterschiedlichen Materialien, wie Metall, Holz, Holzwerkstoffe, Glas, und Kunststoff, fest miteinander verbinden. Diese Verbunde weisen sowohl eine hohe Scher- als auch Schälfestigkeit auf.

Von den Klebstoffverarbeitern werden in zunehmendem Maße Klebstoffdispersionen gewünscht, die trotz niedriger Aktivierungstemperatur Klebstoffverbunde ergeben, die nicht nur bei Raumtemperatur hoch belastbar sind, sondern die auch einer späteren Belastung selbst bei Temperaturen, die beträchtlich oberhalb der Aktivierungstemperatur liegen, standhalten. Diese Eigenschaft wird in der Praxis als "Wärmestandfestigkeit" bezeichnet. Dabei sollte die maximale Temperatur, bei der sich der Klebstoffverbund noch zerstörungsfrei belastet werden kann, möglichst weit oberhalb der Temperatur liegen, auf die der Klebstoffilm vor der Verklebung zu dessen Aktivierung erwärmt wird (Aktivierungstemperatur). Zudem sollten die Klebstoffverbunde bereits kurze Zeit nach der Verklebung hoch belastbar sein, also eine hohe Sofortfestigkeit aufweisen.

Aus der EP-A-419945 sind wässerige Polyurethandispersionen bekannt, die die Herstellung von Klebstoffverbunden ermöglichen, die eine hohe Erweichungstemperatur, gemessen nach der Methode ASTM D-816, aufweisen. Zu deren Herstellung werden Polyurethanpräpolymere die Polyethylenoxid- und Isocyanatgruppen tragen, in Wasser dispergiert und danach mit einem Kettenverlängerer, der im statistischen Mittel 2,05 bis 2,50 Aminogruppen trägt, kettenverlängert. Das Eigenschaftsspektrum dieser Dispersionen vermag jedoch noch nicht vollständig zu befriedigen.

Ähnliche Polyurethandispersionen sind auch aus der GB-B-2 104 085, US-A-4 501 852, DE-A- 2 755 544, DE-A-2 035 730, DE-A-3 613 492, DE-A-2 808 503 und WO-A-8 102 894 bekannt.

Die Aufgabe der vorliegenden Erfindung bestand daher darin, Klebstoffdispersionen mit einem hohen Eigenschaftsniveau bereitzustellen, die sich bei niedrigen Temperaturen aktivieren lassen und trotzdem eine hohe Wärmestandfestigkeit aufweisen und insbesondere eine hohe Sofortfestigkeit aufweisen.

Demgemäß wurden die eingangs definierten wässerigen Polyurethandispersionen, Verfahren zu deren Herstellung und Verfahren zur Herstellung von Klebstoffverbunden gefunden.

Als Monomere (a) kommen die üblicherweise in der Polyurethanchemie eingesetzten Diisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methan wie das trans/trans-, das cis/cis- und das cis/trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 80 mol-% 2,4-Diisocyanatotoluol und 20 mol-% 2,6-Diisocyanatotoluol. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Im Hinblick auf gute Filmbildung und Elastizität kommen als Diole (b) vornehmlich höhermolekulare Diole (b1), in Betracht, die ein Molekulargewicht von etwa 500 bis 5000, vorzugsweise von etwa 100 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-CCOH, wobei y eine Zahl von 1 bis 20, bevorzugt eine gerade Zahl von 2 bis 20 ist, z.B. Bernsteinsaure, Adipinsäure, Dodecandicarbonsäure und Sebacinsäure.

Besonders bevorzugt sind Polyesterdiole aufgebaut aus 1,4-Butandiol und Adipinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist. Beispiele sind epsilon-Caprolacton, β-Propiolacton, gamma-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α-ω-Dihydroxypolybutadien, α-ω-Dihydroxypolymethacrylester oder α-ω-DihydroxyPolyacrylester als Monomere (b1). Solche Verbindungen sind beispielsweise aus er EP-A-0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane läßt sich erhohen, wenn als Diole (b) neben den Diolen (b1) noch niedermolekulare Diole (b2) mit einem Molekulargewicht von etwa 62 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen bevorzugt werden.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,2 : 1 bis 5:1, besonders bevorzugt 0,5 : 1 bis 2 : 1.

Um die Wasserdispergierbarkeit der Polyurethane zu erreichen, sind die Polyurethane neben den Komponenten (a), (b) und (d) aus von den Komponenten (a), (b) und (d) verschiedenen Monomere (c), die wenigstens zwei Isocyanatgruppen oder wenigstens zwei gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff hydrophile Gruppen oder potentiell hydrophile Gruppen mit (potentiell) hydrophile Gruppen abgekürzt. Die (potentiell) hydrophilen Gruppen reagieren mit Isocyanaten wesentlich langsamer, als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), ( c), (d) und (e) wird im allgemeinen so bemessen, daS die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (c) sind z.B. in Ullmanns Encyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: N,N'-Bis(hydroxyalkyl)-alkylamine, N-Hydroxyalkyl-dialkylamine, N,N'-Bis(aminoalkyl)-alkylamine, N-Aminoalkyldialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden, z.B. Bromiden oder Chloriden in die Ammoniumsalze überführt.
Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel 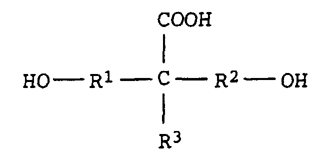 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Als Monomere (c) mit gegenüber Isocyanaten reaktiven Aminogruppen kommen Aminocarbonsäuren wie Lysin, β-Alanin, die in der DE-A-2034479 genannten Addukte von aliphatischen diprimären Diaminen an α,β-ungesättigte Carbon- oder Sulfonsäuren in Betracht.

Solche Verbindungen gehorchen beispielsweise der Formel (d1)

H₂N-R⁴-NH-R⁵-X (d1)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (d1) sind die N-(2-Aminoethyl)-2-aminoethancarbonsäure und die sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z.B. in der D 1 954 090 beschrieben sind.

Gegebenenfalls werden zum Aufbau der Polyurethane weiterhin von den Monomeren (a) bis (c) verschiedene Monomeren mit 2 gegenüber Isocyanatgruppen reaktive Gruppen, ausgewählt aus der Menge der primären Aminogruppe, der sekundären Aminogruppe, und der alkoholischen Hydroxylgruppe und der Thiolgruppe eingesetzt.

Als Monomere (d) kommen insbesondere aliphatische Amine mit einem Molekulargewicht bis 300 in Betracht, die 2 Aminogruppen ausgewählt aus der Gruppe der primären und sekundären Aminogruppen tragen. Beispiele hierfür sind Ethylendiamin, Isophorondiamin, Aminoethylethanolamin, Piperazin, Hydrazin, 1,3-Propandiamin, N,N'-Dimethylalkandiamine, Hexamethylendiamin.

Die Monomere (e) enthalten mindestens 3 Reaktivgruppen (e), ausgewählt aus der Menge der primären Aminogruppe, der sekundären Aminogruppe und der Thiolgruppe.

Hierzu geeignete Amine sind im allgemeinen polyfunktionelle Amine des Molgewichtsbereiches von 32 bis 500 g/mol, vorzugsweise von 60 bis 300 g/mol, also Triamine wie Diethylentriamin oder 1,8-Diamino-4-aminomethyloctan oder Tetramine wie Triethylentetramin.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Üblicherweise werden die stöchiometrischen Verhältnisse so gewählt, daß das Verhältnis der Isocyanatgruppen der Monomere (a) zu den mit Isocyanatgruppen reaktiven Gruppen der Monomere (b), (c), (d) und (e) 0,85 bis 1,15 beträgt.

Wasser wird in diese Berechnung nicht mit einbezogen, sofern es als Dispergiermittel oder als Lösungsmittel für die Monomere (c) eingesetzt wird, die als Salze eingesetzt werden, da es langsamer mit den Isocyanatgruppen reagiert als Aminogruppen.

Die Polyaddition der Komponenten (a) bis (d) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach folgendem Verfahren hergestellt:

In Schritt (I) wird aus den Komponenten (a) bis ( c) und gegebenenfalls (d), bevorzugt in einem mit Wasser mischbaren und bei Normaldruck unter 100°C siedenden Lösungsmittel, ein ionisches Polyurethanpräpolymer hergestellt, das einen NCO-Gehalt (NCO_{(a+b+c+d)}) von 0,05 bis 0,6, bevorzugt von 0,1 bis 0,55 Gew.-% aufweist. Hierbei wird von einem Molekulargewicht von 42 g/mol für NCO ausgegangen.

Bei einer Variante, dem sog. "Acetonverfahren", wird in Schritt (I) zunächst im wesentlichen nur aus den Komponenten (a) und (b) ein Präpolymer hergestellt.

Die Umsetzung von (a) und (b) wird soweit fortgesetzt bis die Reaktionsmischung den folgenden NCO-Gehalt (NCO_{(a+b)}) erreicht hat.

Die Bildung des Polyurethanpräpolymeren gemäß Schritt (I) wird bei dieser Variante abgeschlossen, indem man zu dem Zwischenprodukt aus den Monomeren (a) und (b) das Monomer (c) und gegebenenfalls (d) hinzufügt. Der Zusatz der Monomeren (c) und (d) geschieht häufig in Form einer wässerigen Lösung von Aminen mit 2 gegenüber Isocyanaten reaktiven Aminogruppen, wobei das Amin, das zur Gruppe der Monomere (d) gehört, zusätzlich die (potentiell) hydrophile Gruppe trägt. Damit der Rest-NCO-Gehalt des aus der Umsetzung des Zwischenproduktes aus (a) und (b) mit diesen Monomeren (c) und (d) gebildeten Polyurethanpräpolymeren nicht durch die Reaktion mit Wasser abgebaut wird, sollte sich die Dispergierung (Schritt II) unmittelbar an diesen Schritt (I) anschließen. Durch die Wahl eines geeigneten NCO_{(a+b)}-Wertes wird also sichergestellt, das auch nach der Umsetzung mit den Monomeren (c) und (d) noch genügend hoher Rest-NCO-Gehalt im Polyurethanpräpolymeren vorhanden ist, um die weitgehend vollständige Umsetzung mit dem Kettenverlängerer (e) zu ermöglichen.

Anschließend wird in Schritt (II) soviel Wasser zugegeben, bis sich eine Dispersion bildet, in der Wasser die kohärente Phase darstellt.

Danach wird in Schritt (III) der Kettenverlängerer (e) zugesetzt.

Die Zeitspanne vom Beginn der Dispergierung bis zum Zusatz des Kettenverlängerers (e) sollte möglichst kurz gewählt werden, d.h. sie sollte 40 min, bevorzugt 30 min nicht überschreiten, da ansonsten ein zu großer Anteil der NCO-Gruppen des in Schritt (I) hergestellten Präpolymeren bereits mit dem Wasser abreagiert. Aus dem gleichen Grund sollte die Temperatur in einem Bereich von RT bis 50°C liegen.

Die Bestimmung des NCO-Gehaltes des Präpolymeren(NCO_{(a+b+c+d)}) erfolgt im allgemeinen titrimetrisch und ist allgemein bekannt. Falls jedoch Monomeren (c) und (d) in Salzform und in Wasser gelöst eingesetzt werden, versagt jedoch die titrimetrische Bestimmungsmethode und an deren Stelle tritt die Berechnung aus dem NCO_{(a+b)}-Gehalt, wobei davon ausgegangen wird, daß die Komponenten (c) und (d) vollständig abreagierten.

Der NCO-Gehalt einer gemäß Schritt (II) hergestellten Polyurethanpräpolymers läßt sich auch einfach durch Aufnahme eines IR-Spektrums ermitteln. Das IR-Spektrum wird zweckmäßigerweise mit Hilfe eines kommerziellen FTIR-Gerätes aufgenommen, das mit einer horizontal liegenden ATR-Einheit (Attenuated Total Reflection-Einheit) ausgestattet ist. Die ATR-Methode ist beispielsweise aus H.H. Perkampus, Lexikon Spektroskopie VCH, 1993 bekannt. Für die Messung wird ein Tropfen der Dispersion auf den Kristall aufgebracht und mit einem Glasplättchen abgedeckt. Das Spektrum kann wie üblich aufgenommen werden. Das Ergebnis dieser Messung kann mit Hilfe einer Eichmessung ausgewertet werden. Diese Eichmessungen führt man mit Polyurethanpräpolymerer, die eine definierte Menge von NCO-Gruppen aufweisen durch.

Die auf diese Weise hergestellten Polyurethandispersionen weisen üblicherweise einen K-Wert von 65 bis 85 auf. Besonders günstige Eigenschaften weise Dispersionen mit K-Werten von 70 bis 75 auf.

Der K-Wert ist ein Maß für das Molekulargewicht und kann wie nach der in Kirk-Othmer, Encyclopedia of Chemical Technology, Third Edition, John Wiley & Sons, Inc. 1983, Volume 23 auf S. 967 beschriebenen Methode bestimmt werden. Als Lösungsmittel eignet sich N-Methylpyrrolidon oder Dimethylformamid.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250s⁻¹).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere z.B. in der DE-A3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden. Die in DE-A-3903538, 4024567 und 43 09 079 genannten hydrophoben Hilfsmittel sind hiermit vollständig einbezogen.

Die Polyurethan Dispersionen können handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten. Die erfindungsgemäßen Dispersionen eignen sich zur Verklebung unterschiedlichster Substrate nach den auf dem Gebiet der Klebstoffverarbeitung allgemein für wässerige Dispersion bekannten Methoden.

Geeignete Gegenstände sind beispielsweise solche aus Holz, Holzfasern, Metall, Kunststoff oder Leder, z.B. Folien aller Art, insbesondere Möbelfolien oder Kunststoffschaum.

Um besonders wärmestandfeste Verklebungen zu erzielen, geht man dabei im allgemeinen so vor, daß man die folgenden Arbeitsschritte ausführt:
Ia. Herstellung einer Beschichtung Ia durch Beschichtung von Teilen eines Gegenstandes mit der erfindungsgemäßen wässerigen 2K-Dispersion,
IIa. Herstellung einer Beschichtung IIa durch Trocknen der Beschichtung Ia,
IIIa. Herstellung einer Verklebung IIIa durch In-Kontakt-Bringen der Oberfläche der Beschichtung IIa miteinander, mit einem Teil der Oberfläche des Gegenstandes, der nicht mit der Beschichtung IIa beschichtet ist, oder der Oberfläche eines anderen Gegenstandes, wobei die Beschichtung IIa eine Temperatur von 20 bis 200°C aufweist.

Nach einer weiteren bevorzugten Methode zur Verklebung geht man so vor:
Ib. Herstellung einer Beschichtung Ib durch Beschichtung von Teilen eines Gegenstandes mit der wässerigen 2K-Dispersion,
IIb. Herstellung einer Beschichtung IIb durch Trocknen der Beschichtung Ib,
IIIb. Herstellung einer Beschichtung IIIb durch Erwärmung der Beschichtung IIb auf eine Temperatur von 30 bis 100°C und
IVb. Herstellung einer Verklebung IVb durch In-Kontakt-Bringen der Oberfläche der Beschichtung IIIb, miteinander, mit einem Teil der Oberfläche des Gegenstandes, der nicht mit der Beschichtung IIa beschichtet ist, oder der Oberfläche eines anderen Gegenstandes, innerhalb von 15 min nach der Abkühlung der Beschichtung IIIb auf eine Temperatur von 30 bis 80°C.

Zur Verbesserung der Wärmestandfestigkeit können den Dispersionen, bevorzugt unmittelbar vor dem Aufbringen auf die Werkstücke, wasseremulgierbare Isocyanate, wie sie beispielsweise durch Umsetzung von Polyisocyanaten mit Poly C₂- bis C₄-alkylenglykolen erhalten werden können (vgl. EP-A-0206059 und DE-A-4036927) zugesetzt werden.

Die Herstellung der Beschichtung Ia bzw. Ib erfolgt zweckmäßigerweise nach üblichen Methoden wie Sprühen, Gießen oder Rakeln.

Beim Aufsprühen der Dispersion IIa bzw. IIb kann häufig auf einen separaten Trocknungsschritt verzichtet werden, da beim Sprühen schon ein großer Anteil des Wassers verdampft.

Das Trocknen der Beschichtung Ia bzw. Ib (Herstellung der Beschichtung IIa bzw. IIb) kann bei Raumtemperatur oder bei erhöhter Temperatur, z.B. bei Temperaturen von 40 bis 150°C durch Bestrahlung mit Infrarotlicht durchgeführt werden.

Beschichtungen IIa bzw. IIb enthalten nach der Trocknung üblicherweise weniger als 5 Gew.-% Wasser.

Wird das Trocknen der Beschichtung Ib bei einer Temperatur von mindestens 30°C durchgeführt, so erfolgt dabei gleichzeitig die Herstellung der Beschichtung IIb und IIIb in einem Arbeitsschritt.

Ansonsten kann die Herstellung der Beschichtung IIIb aus der Beschichtung IIb ebenfalls durch Bestrahlung mit Infrarotlicht oder durch Erwärmung in einem Heißluftstrom zu einem späteren Zeitpunkt erfolgen.

Die Herstellung der Verklebungen IIIa bzw. IVb wird üblicherweise in Pressen durchgeführt, wobei üblicherweise ein Druck von 0,05 bis 5 N/mm² angewendet wird. Im Falle der Herstellung der Verklebungen IIIa werden üblicherweise beheizte Pressen eingesetzt.

Das Verfahren der Verklebung durch In-Kontakt-Bringen der Oberfläche der Beschichtungen IIa bzw. IIIb miteinander oder mit anderen Teilen der Oberfläche des Gegenstandes erfordert selbstverständlich eine Flexibilität des Gegenstandes, auf den Beschichtung aufgebracht wurde, wie sie beispielsweise bei Folien vorhanden ist. Von diesem Verfahren wird beispielsweise in der Verpackungsindustrie Gebrauch gemacht. Teile einer mit den Beschichtungen IIa bzw. IIIb beschichteten Folie werde beispielsweise gefaltet und die übereinanderliegenden Folienteile an geeigneten Stellen so verklebt, daS Beutel oder Taschen entstehen.

Verklebungsverfahren, wobei die Beschichtung IIa bzw IIIb mit der Oberfläche eines anderen Gegenstandes verklebt wird, werden beispielsweise zur Herstellung von Verbunden aus Hartfaserplatten mit PVC-Folie eingesetzt. Diese Verbundmaterialien finden beim Automobilinnenausbau Verwendung. Besonders hohe Verbundfertigkeiten werden erreicht, wenn die Oberfläche des anderen Gegenstandes ebenfalls mit einer Beschichtung IIa bzw. IIIb versehen ist. Die Materialien der miteinander zu verklebenden Gegenstände können gleich oder verschiedenartig sein.

### Herstellungsbeispiele:

### Abkürzungen

- VE-Wasser =: entiontes Wasser
- DETA =: Diethylentriamin
- p-THF 2000 =: Polytetrahydrofuran mit einem Molerkulargewicht von 2000
- RT =: Raumtemperatur
- OHZ =: Hydroxylzahl
- AD =: Adipinsäure
- TDI =: Toluylendiisocyanat
- HDI =: Hexamethylendiisocyanat
- DBTL =: Dibutylzinndilaurat
- DMPA =: Dimethylolpropionsäure
- FG =: Feststoffgehalt

Die Viskositäten der Dispersionen wurden bei einer Temperatur von 20°C und einer Schergeschwindigkeit von 250s⁻¹ mit einem Rotations-Rheometer mit konzentrischen Zylindern (Spindeldurchmesser 38,7 mm, Becherdurchmesser: 42,0 mm) vermessen.

Die Teilchengröße der Latexpartikel (LD) wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

Der K-Wert wurde nach der in Kirk-Othmer, Encyclopedia of Chemical Technology, Third Edition, John Wiley & Sons, Inc. 1983, Volume 23 auf S. 967 beschriebenen Methode bestimmt. Als Lösungsmittel diente Dimethylformamid.

### Herstellung der Dispersionen

### Beispiel 1

639,8 g (0,263 mol) eines Polyesters aus Adipinsäure und Butandiol-1,4 (OHZ=46), 23,6 g (0,263 mol) Butandiol-1,4 und 0,05 g DBTL wurden in 477,8 g Aceton vorgelegt und 1 h bei 62°C mit 60,2 g (0,346 mol) TDI umgesetzt. Dann wurden 58,15 g (0,346 mol) HDI zugegeben und noch 210 min bei 60°C gerührt. Es wurde mit 477,8 g Aceton verdünnt und auf 30°C abgekühlt (der gemessene NCO-Wert der Lösung betrug 0,73 %). Dann wurden 45,5 g einer 40%igen wäßrigen Lösung eines Adduktes von Ethylendiamin an Na-Acrylat zugegeben (der NCO-Gehalt des Polymers betrug 0,48 %) und mit 800 g VE-Wasser dispergiert. Sofort danach wurden 0,3 g (0,0029 mol) DETA in 20 g VE-Wasser zugetropft. Das Aceton wurde abdestilliert und die Dispersion auf 50 % Feststoffgehalt eingestellt.
LD: 93; Visk.: 400 mPas; pH: 8,5; K-Wert: 75

### Beispiel 2

558,7 g (0,279 mol) p-THF 2000, 0,02 g DBTL, 50,3 g (0,558 mol) Butandiol-1,4 wurden in 477 g Aceton bei 60°C mit 87,5 g TDI 1 h umgesetzt (der gemessene NCO-Wert der Lösung beträgt 0,66 %). Dann wurden 84,5 g HDI zudosiert und 105 min weitergerührt. Es wurde mit 477 g Aceton verdünnt, auf 30°C abgekühlt und mit 47,74 g einer 40%igen wäßrigen Lösung (0,094 mol) des N-Aminoethyl-aminoethan-Na-sulfonates zugegeben. Der berechnete NCO-Gehalt des Polymers betrug 0,46 %. Es wurde mit 1200 g VE-Wasser dispergiert und sofort danach 1 g (0,0097 mol) DETA in 50 g VE-Wasser zugetropft. Das Aceton wurde abdestilliert und die Dispersion auf 40 % Feststoffgehalt eingestellt.
LD: 8; Visk.: 22 mPas; pH: 6,6; K-Wert: 62

### Beispiel 3

Der gleiche Versuch wurde mit 40,95 g einer wäßrigen Lösung des Adduktes von Ethylendiamin an Na-Acrylat durchgeführt.
LD: 88; Visk.: 45 mPas; pH: 7,8; K-Wert: 82

### Beispiel 4

17,7 kg des Polyesters aus Beispiel 1 (OHZ=45), 1,8 g DBTL, 1,28 kg Butandiol-1,4 wurden in 14,4 kg Aceton mit 2,27 kg TDI 1 h bei 65°C umgesetzt. Dann wurde 2,19 kg HDI zugegeben und noch 140 min bei 65°C weiterreagiert (der gemessene NCO-Wert der Lösung betrug 0,69 %). Es wurde mit 14,4 kg Aceton verdünnt und auf 30°C abgekühlt. Dann wurde mit 1,23 kg PUD-Salz kettenverlängert. Der berechnete NCO-Gehalt des Polymeren betrug 0,52 %. Es wurde mit 36 kg VE-Wasser dispergiert und sofort danach 9 g DETA gelöst in 1 kg VE-Wasser zugetropft. Das Aceton wurde abdestilliert und der Feststoffgehalt auf 40 % eingestellt.
LD: 66; Visk.: 24,5 mPas; pH: 8,2; K-Wert 71

### Vergleichsversuch 1: (NCO-Gehalt des Polyurethans >0,6 %)

601,6 g (0,247 mol) eines Polyesters aus Adipinsäure und Butandiol (OHZ=46), 16,1 g (0,12 mol) DMPA, 0,4 g DBTL, 35,56 g (0,395 mol) Butandiol-1,4 wurden in 195,5 g Aceton vorgelegt und bei 65°C mit 74,6 g (0,429 mol) TDI 1 h umgesetzt. Dann wurden 72,1 g (0,429 mol) HDI zugegeben 140 min bei 70°C gerührt. Es wurde mit 782 g Aceton verdünnt und auf 30°C abgekühlt. Das Prepolymer hatte einen NCO-Gehalt von 0,91 %. Es wurde mit 10,89 g 44%iger NaOH in 12 g VE-Wasser neutralisiert und mit 1200 g VE-Wasser dispergiert. Sofort danach wurden 0,3 g (0,0029 mol) DETA in 7 g VE-Wasser zugetropft.
Das Aceton wird im Vakuum bei Temperaturen bis 43°C abdestilliert und die Dispersion auf 40 % Feststoffgehalt eingestellt.
LD: 87; Visk.: 33 mPas; pH: 8,0; K-Wert: ungelöste Anteile

### Vergleichsversuch 2

712 g (0,29 mol) des Polyesters aus Beispiel 1 werden mit 0,03 g DBTL und 34,6 g TDI (0,198 mol) in 190,3 g Aceton 1 h bei 65°C umgesetzt. Dann werden 33,4 g HDI (0,198 mol) zugegeben und noch 1 h 35 min weiter umgesetzt. Es wird mit 762,9 g Aceton verdünnt und auf 50°C abgekühlt. Der gemessene NCO-Wert der Lösung betrug 0,61 %. Dann wird mit 41,5 g (0,094 mol) einer 48%igen wäßrigen Lösung des N-Aminoethylaminoethan-Na-sulfonates kettenverlängert und mit 1200 g VE-Wasser dispergiert. Der berechnete NCO-Gehalt des Polymers vor der Dispergierung betrug 0,34 %. Nach dem Abdestillieren des Acetons wird der Feststoffgehalt auf 40 % eingestellt.
LD: 90,5; Visk.: 46 mPas; pH: 7,5; K-Wert: 51,4

### B. Anwendungstechnische Prüfung

Die Dispersionen werden mittels Spritzpistole auf je 5 Suchenholzprüfkörper aufgebracht. Nach 60 Minuten Trocknung bei R.T. wird eine handelsübliche PVC-Möbelfolie in einerer Presse auf das Buchenholz kaschiert (Preßdruck: 0,5 N/mm², Preßdauer: 10 s). Nach der Kaschierung und anschließender Temperierung (3 Min. bei 80°C) werden die Prüfkörper einer Wärmebelastung bei 80°C unterzogen. Begonnen wird mit 500 g Belastung. Erfolgt nach 5 min noch keine vollständige Abschälung, wird mit weiteren 500 g belastet usw, bis entweder <20 mm abgeschält ist oder eine Gesamtbelastung von 3000 g erreicht ist. Die Prüfergebnisse können der Tabelle entnommen werden.

| Beispiel | Sofortfestigkeit | K-Wert |
|---|---|---|
| Beispiel 1 | 3 x 3 kg | 75 |
| | 2 x 2,5 kg | |
| Beispiel 4 | 3 x 2,5 kg | 71 |
| | 2 x 2 kg | |
| Vergleichsbeispiel | 1 5 x <0,5 kg | ungelöst |
| Vergleichsbeispiel | 2 5 x <0,5 kg | 51,4 |

## Patentansprüche

1. Verfahren zur Herstellung von wässerigen Dispersionen, enthaltend ein Polyurethan, wobei man zur Herstellung dieses Polyurethans
I. in Schritt (I) zunächst ein Polyurethanpräpolymer mit einem NCO-Gehalt von 0,05 bis 0,6 Gew.-% herstellt, welches aufgebaut ist aus
a) Diisocyanaten mit 4 bis 30 C-Atomen,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomeren mit zwei Isocyanatgruppen oder wenigstens zwei gegenüber Isocyanatgruppen reaktiven Gruppen, die darüber hinaus wenigstens eine hydrophile Gruppe oder eine potentiell hydrophile Gruppe tragen, wodurch die Wasserdispergierbarkeit der Polyurethane bewirkt wird und
d) gegebenenfalls von den Monomeren (a) bis (c) verschiedene Monomeren mit 2 gegenüber Isocyanatgruppen reaktiven Gruppen, ausgewählt aus der Menge der primären Aminogruppe, der sekundären Aminogruppe, und der alkoholischen Hydroxylgruppe und der Thiolgruppe
II. in Schritt (II) das gemäß Schritt (I) hergestellte Polyurethanpräpolymer in Wasser dispergiert und
III. in Schritt (III) der gemäß Schritt (II) hergestellten Polyurethanpräpolymer-Dispersion einen Kettenverlängerer (e) mit mindestens 3 Reaktivgruppen (e), ausgewählt aus der Menge der primären Aminogruppe, der sekundären Aminogruppe und der Thiolgruppe, in solchen Mengen zusetzt, daß auf 1 mol Isocyanatgruppen im Polyurethanpräpolymer 1,1 bis 0,05 Reaktivgruppen (e) kommen.

2. Verfahren nach Anspruch 1, dadurch gekennzeichnet, daß man als Diisocyanat (a) Hexamethylendiisocynat oder Toluylendiisocyanat oder ein Gemisch beider Isocyanate einsetzt.

3. Verfahren nach Anspruch 1 oder 2, dadurch gekennzeichnet, daß man als Diol (b1) einen Polyesterdiol aufgebaut aus 1,4-Butandiol und Adipinsäure einsetzt.

4. Verfahren nach den Ansprüchen 1 bis 3, dadurch gekennzeichnet, daß man als Monomer (c) Dimethylolpropionsäure oder das Addukt von Ethylendiamin an ein Alkalisalz der Acrylsäure oder das Alkalisalz einer Amino-(C₂ bis C₆-alkyl)-amino-(C₂ bis C₆-alkyl)sulfonsäure einsetzt.

5. Verfahren nach den Ansprüchen 1 bis 4, dadurch gekennzeichnet, daß man als Kettenverlängerer (e) Diethylentriamin oder Triethylentetramin einsetzt.

6. Verfahren nach den Ansprüchen 1 bis 5, dadurch gekennzeichnet, daß das Verhältnis der Isocyanatgruppen der Monomere (a) zu den mit Isocyanatgruppen reaktiven Gruppen der Monomere (b), (c), (d) und (e) 0,85 bis 1,15 beträgt.

7. Wässerige Dispersionen, enthaltend ein Polyurethan (A), erhältlich nach einem der Verfahren nach den Ansprüchen 1 bis 6.

8. Verfahren zum Verkleben von Gegenständen, dadurch gekennzeichnet, daß man die folgenden Arbeitsschritte ausführt:
Ia. Herstellung einer Beschichtung Ia durch Beschichtung von Teilen eines Gegenstandes mit einer wässerigen Dispersion gemäß Anspruch 7,
IIa. Herstellung einer Beschichtung IIa durch Trocknen der Beschichtung Ia,
IIIa. Herstellung einer Verklebung IIIa durch In-Kontakt-Bringen der Oberfläche der Beschichtung IIa miteinander, mit einem Teil der Oberfläche des Gegenstandes, der nicht mit der Beschichtung IIa beschichtet ist, oder der Oberfläche eines anderen Gegenstandes, wobei die Beschichtung IIa eine Temperatur von 20 bis 200°C aufweist.

9. Verfahren zum Verkleben von Gegenständen, dadurch gekennzeichnet, daß man die folgenden Arbeitsschritte ausführt:
Ib. Herstellung einer Beschichtung Ib durch Beschichtung von Teilen eines Gegenstandes mit einer wässerigen Dispersion gemäß Anspruch 7,
IIb. Herstellung einer Beschichtung IIb durch Trocknen der Beschichtung Ib,
IIIb. Herstellung einer Beschichtung IIIb durch Erwärmung der Beschichtung IIb auf eine Temperatur von 30 bis 100°C und
IVb. Herstellung einer Verklebung IVb durch In-Kontakt-Bringen der Oberfläche der Beschichtung IIIb, miteinander, mit einem Teil der Oberfläche des Gegenstandes, der nicht mit der Beschichtung IIb beschichtet ist, oder der Oberfläche eines anderen Gegenstandes, innerhalb von 15 min nach der Abkühlung der Beschichtung IIIb auf eine Temperatur von 30 bis 80°C.

10. Verklebte Gegenstände, erhältlich nach den Verfahren nach Anspruch 8 oder 9.
